# EUROPEAN PATENT APPLICATION

(11) **EP 4 749 737 A1**
(43) Date of publication of application: **27.05.2026**
(21) Application number: 25217641.7
(22) Date of filing: 21.11.2025
(51) Int. Cl.: H01M 10/04, B60L 50/64, H01M 10/613, H01M 10/625, H01M 50/249, H01M 10/647, H01M 10/6554, H01M 50/119, H01M 10/6562, H01M 50/103, H01M 50/15, H01M 50/202, H01M 50/209, H01M 50/26, H01M 50/291

(54) **IMPROVED BATTERY CELL, BATTERY MODULE AND BATTERY PACK**

(30) Priority: 21.11.2024 IT 202400026301
(71) Applicant: FPT Industrial S.p.A., 10156 Torino (IT)
(72) Inventor: BIALEK, Markus, 10156 TORINO (IT); MERRITT, Simon, 10156 TORINO (IT)
(74) Representative: Studio Torta S.p.A.

(57) **Abstract**

Battery cell (2) for a battery module (1) for a vehicle, comprising an outer layer (2') housing a body of the battery cell (2) and at least one naked portion (2'') that is not provided by the outer layer (2'') thereby letting the body directly exposed to the environment. Such feature allows an advantageous use in a housing system and a battery module designed to use such naked portion (2'').

## Description

### CROSS-REFERENCE TO RELATED APPLICATIONS

This patent application claims priority from Italian patent application no. 102024000026301 filed on November 21, 2024, the entire disclosure of which is incorporated herein by reference.

### TECHNICAL FIELD

The present invention concerns a battery cell, a battery module and a battery pack,

The present invention finds its preferred, although not exclusive, application in vehicular field. Reference will be made to this application by way of example below.

### BACKGROUND OF THE INVENTION

Vehicles tend more and more to be electrified in order to reduce emissions due to the use of internal combustion engines or to completely replace these ones.

To this end, hybrid, electric, or hydrogen vehicles are increasingly used. These vehicles, as known, use electrical energy for the purpose of driving/operating the vehicle operating systems or store electrical energy produced by generators via battery systems.

These battery systems comprise one or more battery module housed inside a casing that isolates them from the external environment and allows the necessary wiring to be housed, thereby defining a battery pack

Battery cells are stacked in battery modules in rows adjacent to the other.

Each battery cell comprises a body, often referred to as the cell can, that is usually in metallic material and that is usually covered by an outer layer made of suitable material, usually not a metallic material, in particular polyethylene terephthalate, PET.

Such battery cells are usually fixed within the battery module by gluing. However, gluing between the outer layer thereof and the metal portion of the battery pack is difficult due to the incompatibility of validly gluing such two materials.

Indeed, PET is difficult to be glued and when glued has a very low strength. Therefore, the gluing of PET towards other materials provides a very low strength connection.

Moreover, it is difficult to apply glue where needed and if it is necessary to remove a battery this implies complicated, long and costly operations.

Moreover, existing battery modules are not sufficiently strong to maintain battery packs stacked therein because of loads acting on the batter pack.

Accordingly, tilting/swelling of battery is possible thereby leading to incorrect relative positioning that can lead to uneven pressure distribution and high local stresses.

Furthermore, as known, electric batteries used in these vehicles are electrochemical storage devices that, during use, when charging, or discharging, tend to heat up.

The dimension change due to heating and the heating itself further increase the gravity of the aforementioned drawbacks.

Moreover, the above defined local stresses may lead to the phenomenon called "thermal runaway" in which the temperature triggers exothermic reactions that further raise the temperature and, thus, as a result leads to disastrous consequences such as explosions or fires.

In view of the above, there is need to improve known battery packs, in order to better stack batteries without incurring in the discussing drawbacks.

An aim of the present invention is to satisfy the above mentioned needs in a cost-effective and optimized manner.

### SUMMARY OF THE INVENTION

The aforementioned aim is reached by a battery module and a battery pack as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:

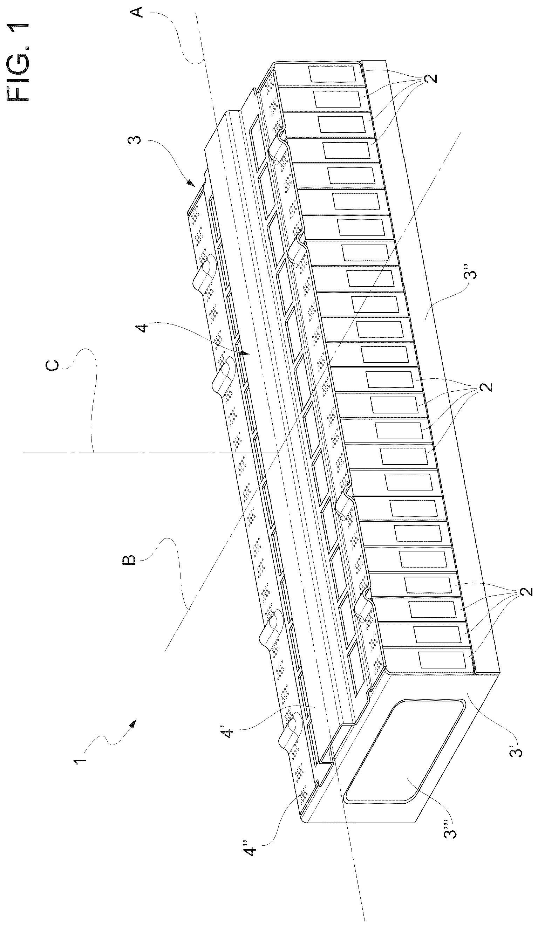

- Figure 1 is a perspective view of a battery module comprising a housing system according to the present invention;
- Figure 2 is a perspective view of a plurality of battery cells according to the invention;
- Figure 3 is a perspective view of a battery cell according to the invention;
- Figure 4 is a perspective view of the battery module of figure 1; and
- Figure 5 is an enlarged perspective view of a portion of the battery module of Figure 1.

### DETAILED DESCRIPTION OF THE INVENTION

The attached figures disclose a battery module 1 that can be used in a battery pack of a vehicle (not shown).

Battery module 1 comprises a plurality of battery cells 2 that are stacked together. At least one of such battery module 1 is housed within a housing of a battery pack (not shown).

Battery module 1 extends along a longitudinal axis A, a traversal axis B and a vertical axis C and similarly each battery cell 2 extends along a longitudinal axis A', a transversal axis B' and a vertical axis C'.

In the disclosed embodiment, each battery module 2 is faced to another along the longitudinal and transversal axis A, B of the battery module 1 and, in particular, they are adjacent along their transversal and longitudinal axis B', A'. In other words, one packed, the longitudinal axis A' of the battery coincides with the transversal axis B of the battery module 1.

In the disclosed embodiment, battery cells 2 are not vertically superposed one with respect to the other.

Battery module 1 essentially comprises housing system comprising a support system 3 and a venting system 4 fixedly connected together to define a space for housing battery cells 2.

In other words, both support system 3 and the venting system 4 contribute to maintain the battery cells 2 packed together in the aforementioned space.

In detail, space S is defined laterally about vertical axis C by support system 3 and vertically delimited on one side by venting channel 4. Preferably, on the bottom side the space is opened towards housing, i.e. the battery cells 2 lies on the housing.

Support system 3 comprises a plurality of walls 3', 3" connected together to delimit the aforementioned space S.

In detail, in the support system 3 comprise front and rear walls 3' extending along the transversal and vertical axis B, C and spaced one with respect to the other along longitudinal axis A.

The front and rear walls 3' have substantially a quadrangular, in detail rectangular, shape extending along transversal and vertical axis B, C and provide longitudinal support to battery cells 2 in longitudinal row one to the other.

Preferably, both front and rear walls 3' comprises a bumper portion 3‴ configured to extends along longitudinal axis A within the space housing battery cells 2 to cooperate at contact with these latter to provide a preset preload along longitudinal direction.

As shown, in the present embodiment such bumper portion 3‴ comprises a central portion having a shape similar to the one of the front and rear walls 3' extending longitudinally cantilevered from the remaining portion of the front and rear walls 3'.

The front and rear walls 3' are connected together by lateral walls 3" that extends along longitudinal axis A. In the disclosed embodiment, they extend along vertical axis C less than the front and rear walls 3' and in particular extends near the bottom side of the front and rear walls 3'.

Preferably, the front and rear walls 3' and lateral walls 3'' are each realized in metal and more in particular each is realized as one piece.

Lateral walls 3" are connected to front and rear walls 3' in a fixed manner, e.g. by a mechanical releasable connection such as via threaded elements or by shape coupling or by a fixed connection such as by glue or by welding.

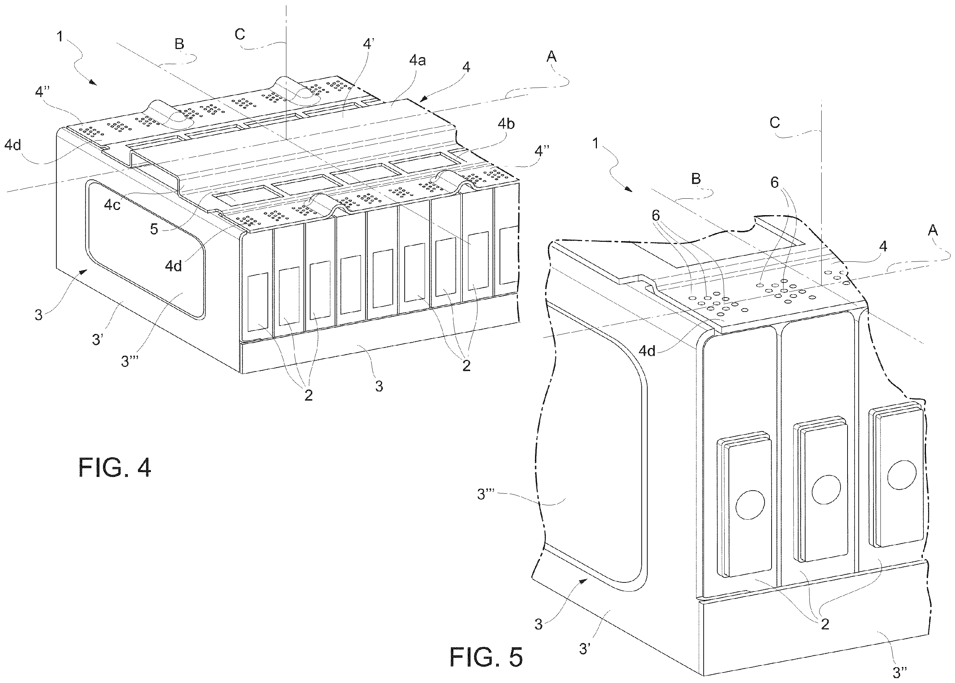

Venting system 4 comprises a venting portion 4' and a pair of fixing portions 4" as better shown in figures 4 and 5.

In detail, venting portion 4' comprises a central portion 4a extending along longitudinal axis A and vertically faced above battery cells 2, i.e. central portion 4a is distanced with respect to battery cells 2.

Venting portion 4' further comprises vertical portions 4b extending from lateral edges of central portion 4a along vertical axis C. In particular, such vertical portions 4b extends vertically along the entire longitudinal extension of the central portion 4a.

The central portion 4a and the vertical portion 4b are substantially plate, in particular they can be realized by a metal bent plate.

According to the above, the venting portion 4' define a channel, delimited transversally by vertical portions 4b and vertically by the central portion 4a and by battery cells 2 and configured to allow the controlled exit of gases in case of thermal runaway. No further detail will gas exit path for sake of brevity.

Fixing portions 4'' extends from vertical portions 4b along transversal axis B along the entire extension of battery cells 2 and are configured to allow connection with front and rear walls 3' of the support system 3.

In particular, each fixing portions 4" comprises a lateral wall 4c extending transversely along the entire longitudinal extension of the vertical portions 4b. Preferably lateral wall 4c extends substantially perpendicularly with respect to vertical portions 4b, i.e. is parallel to the central portion 4a of the venting portion 4' .

In detail the lateral wall 4c is shaped in order to be disposed at contact with the upper surface of the battery cells 2 as shown in detail in figure 5.

As said before, lateral wall 4c extends along transversal axis B till terminal portions 4d thereof reach the entire extension of battery cells 2.

Preferably venting portion 4' and fixing portions 4" are realized as one piece, in detail as one metal piece.

It should be noticed that, preferably, lateral walls 4c are rigidly connected, e.g. by welding, to the support structure 3, in detail to the front and rear portions 3'.

For instance, such front and rear portions 3' may comprise flange portions extending parallel to lateral portion 4c and configured to define a welding spot for fixing together the venting system 4 and the support system 3.

In further detail, lateral portions 4" are provided with openings 5 configured to reduce weight of venting system 4.

In the disclosed embodiment such openings 5 are realized between the terminal portion 4d and the venting portion 4' and extends along longitudinal axis A of the battery module 1.

In further detail, such openings have a quadrangular shape and preferably have the same shape extending equally distanced along longitudinal axis A.

Referring back to battery cells 2, each comprises a body, usually made of metallic material, which is covered by an outer layer 2'. Outer layer 2' may be realized in any suitable material, such as plastic, e.g. polyethylene terephthalate, PET.

In detail, at least a naked portion 2" of the battery body is not covered by the outer layer 2', i.e. a portion of the body that is directly faced to environment. In further detail, such portion 2" is realized on the upper surface of the battery body along vertical axis C, i.e. the surface faced to venting system 4.

In detail, each battery cell 2 comprises a pair of naked portions 2" realized on opposite sides along longitudinal axis A' of the battery cell 2 on the upper surface thereof.

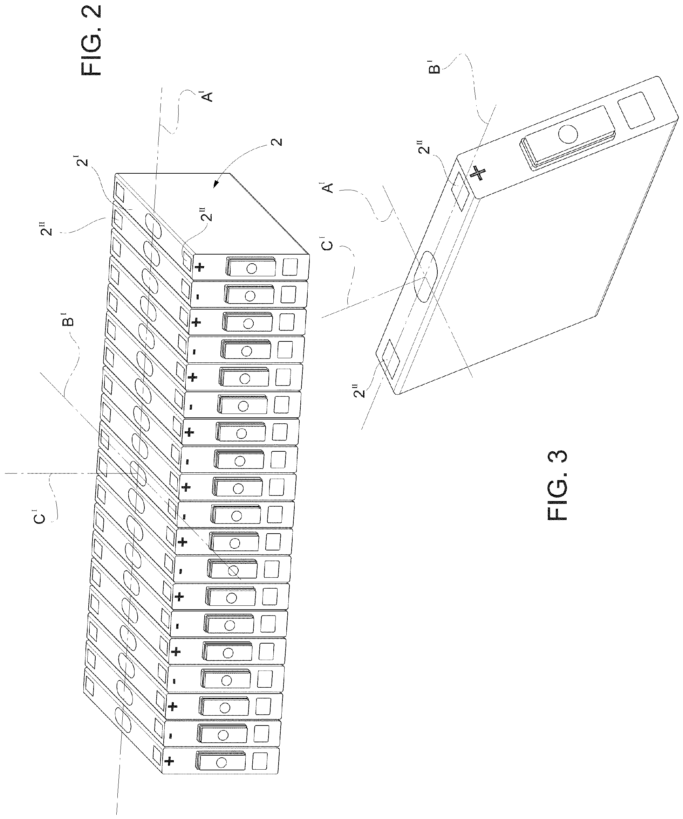

In this way, as shown in figure 2, when batteries are staked one faced on the other along longitudinal and transversal axis A', B' (i.e. axis B, A of the battery module) such naked portions 2" are faced to the main portion 4c of the venting system 4, in particular to terminal portions 4d thereof.

Battery cells 2 are placed in at least one row, in the disclosed embodiment in a pair of rows, within the space defined by support system 3 and venting system 4 and are fixed therein as follows.

Battery cells 2 cooperates at contact with the lateral walls 3" of the support system 3.

In particular, moreover, battery cells 2 are glued on their bottom portion along vertical axis C (i.e. opposite to the portion faced to venting system 4) with a floor element (not shown) of the battery pack housing.

Battery cells 2 are axially compacted along longitudinal axis A due to the preload imparted by bumper portion 3''' that extends within space defined by support system 3 with a slight interference with respect to battery row extension thereby providing a preload force that maintains the row compacted.

Battery cells 2'' are coupled to fixing portions 4", in detail to the terminal portion 4d of lateral walls 4c by gluing. In detail, the naked portions 2" of each battery cell 2 is glued to the terminal portion 4d.

To facilitate such gluing, terminal portions 4d are provided with at least one opening 6 configured to allow glue deposition.

In the disclosed embodiment, terminal portions 4d are provided of a plurality of openings 6. Such plurality of openings 6 are preferably circular. In detail, the free passage of openings 6 can be comprised in a range between 0,1mm to 10 mm, in particular between 1 to 5 mm..

Preferably, openings 6 are placed one adjacent to the other along both longitudinal and transversal axis A, B. In particular they are placed in rows along transversal axis B that are staggered one with respect to the other, along transversal axis B direction, along longitudinal axis A.
In other words it can be disposed in quincunx manner.

In detail, such openings 6 are grouped in different pluralities distanced one another along longitudinal axis A. In detail, such groups are groups of the aforementioned rows. The distance along longitudinal axis A is the distance between two naked portions 2" of the battery cells 2.

Optionally, if needed, battery cells 2 can be glued together on their side, i.e. on the surface defined by their longitudinal and transversal axes A', B'.

The operation of the embodiment of the invention as described above is the following.

Battery cells 2 are placed in rows adjacent one to the other within the support system 3 ensuring gluing of their bottom side an element of the battery pack housing (not shown) and axial preload between front and rear walls 3', 3". Then, venting system 4 is fixed to the support system 3 to provide the venting channel and to strengthen the overall stiffness of the support system 3. The terminal portions 3d via openings 6 are glued to battery cells 2 indeed, glue can pass through openings 6 ensuring metal-to-metal adhesion by appropriate glue.

In view of the foregoing, the advantages of a housing system and a battery module according to the invention are apparent.

Thanks to the proposed battery module, the batteries can be stacked together in a stable manner thereby avoiding any relative movement.

Moreover, the proposed support system has a great stiffness thereby allowing the support of batteries considering the operative loads acting on the battery module and the deformation due to temperature variation of the batteries.

In particular, since the load distribution is uniformed in different points within the support system and the venting system, the pressure is better distributed and therefore there is less risk of concentrated stresses in the batteries.

Moreover, the peculiar structure of the batteries with a naked portion allows direct gluing to a metal support structure, i.e. venting portion lateral walls, thereby avoiding the drawbacks due to plastic-to-metal gluing.

It is clear that modifications can be made to the described housing system and battery module which do not extend beyond the scope of protection defined by the claims.

For example, the batteries can be stacked in different rows/disposition within battery module.

Battery module can have a different shape and extension within longitudinal, transversal and vertical axis. Accordingly, shape of venting system and support system varies consequently.

Moreover, number and shape of the disclosed openings may vary, such as inclination and shapes of the disclosed walls.

## Claims

1. Housing system for a battery module (1) comprising a plurality of battery cells (2),
wherein each battery cell (2) comprises a body and an outer layer (2') housing said body, said battery cell (2) comprising at least one naked portion (2") that is not provided by said outer layer (2") thereby letting said body directly exposed to the environment,
wherein said battery module (1) extends along a longitudinal axis (A), a transversal axis (B) and a vertical axis (C), said battery cells (2) being placed adjacent one to the other along at least one between said longitudinal axis (A), said transversal axis (B) and said vertical axis (C), said housing system comprising a support system (3) and a venting system (4), wherein said support system (3) and said venting system (4) are rigidly connected together to define a space for housing said battery cells (2)
wherein said venting system (4) comprises a venting portion (4') defining a channel for allowing venting of said battery cells (2) and at least one fixing portion (4") configured to be connected to said support system (3).
wherein said fixing portion (4") comprise lateral walls (4c) configured to be rigidly connected to said support system (3), said lateral walls (4c) extending along said longitudinal axis (A) and along said transversal axis (B) to over entirely all the battery cells (2),
wherein said lateral walls (4c) comprise a terminal portion (4d) configured to cooperate at contact with said naked portion (2") of said battery cells (2).

2. Housing system according to claim 1, wherein said body of said battery cell (2) extends along a longitudinal axis (A'), a transversal axis (B') and a vertical axis (C'), said naked portion (2") being provided on an upper side of said body along said vertical axis (C').

3. Housing system according to claim 2, wherein said naked portion (2") is provided on longitudinal extremities upper side of said body.

4. Battery cell according to claim 3, comprising a pair of naked portions (2") provided on both longitudinal extremities of said upper side of said body.

5. Housing system according to any of the preceding claims, wherein said support system (3) comprises a front and a rear walls (3') configured to maintain said battery cells (2) compacted along a longitudinal axis (A) of said battery module (1).

6. Housing system according to any of the preceding claims, wherein said support system (3) comprises lateral walls (3") configured to contain said battery cells (2) along a transversal axis (B) of said battery module (1).

7. Housing system according to claim 5 and 6, wherein said lateral walls (3") are rigidly connected to said front and rear walls (3').

8. Housing system according to claims 5 to 7, wherein said front and rear walls (3') comprises a bumper portion (3‴) extending along said longitudinal axis (A) to be contact with interference said battery cells (2).

9. Housing system according to any of the preceding claims, wherein said venting portion (4') comprises a central portion (4a) extending along said longitudinal axis (A) and distanced along said vertical axis (C) with respect to said battery cells (2) and a pair of vertical portions (4b) extending vertically from said central portion (4a) along said vertical axis (C) towards said battery cells (2) and connected to said fixing portion (4").

10. Housing system according to any of the preceding claims, wherein said lateral walls (4c) are provided with at least one opening (5).

11. Housing system according to any of the preceding claims, wherein said terminal portions (4d) are provided with at least one opening (6) configured to allow insertion of glue between said terminal portion (4d) and said battery cell (2).

12. Battery module (1) comprising a housing system according to any of the preceding claims.

13. Battery module according to claim 12, wherein said battery cells (2) are glued in a bottom portion thereof along said vertical axis (C) to said support system (3).

14. Battery module according to claim 12 or 13, wherein said battery cells (2) are compacted axially by a preload imparted by said support system (3) along said longitudinal axis (A).

15. Battery module according to any of claims 12 to 14, wherein said battery cells (2) are glued between said naked portion (2‴) and said venting portion (4).
